# FASCICULE DE BREVET EUROPEEN

(11) **EP 1 957 410 B1**
(45) Date de publication et mention de la délivrance du brevet: **06.07.2011**
(21) Numéro de dépôt: 06841878.9
(22) Date de dépôt: 07.12.2006
(51) Int. Cl.: C02F 1/28, C02F 1/42

(54) **PROCEDE D'ELIMINATION DE MATIERE ORGANIQUE DANS L'EAU**
VERFAHREN ZUR ENTFERNUNG ORGANISCHER MATERIE AUS WASSER
METHOD FOR REMOVING ORGANIC MATTER FROM WATER

(30) Priorité: 07.12.2005 FR 0512433
(43) Date de publication de la demande: 20.08.2008
(73) Titulaire: Veolia Water Solutions & Technologies Support, 94410 Saint-Maurice (FR)
(72) Inventeur: CROUE, Jean-Philippe, F-86800 Savigny L'Evescault (FR); HUMBERT, Hugues, F-77410 Claye Souilly (FR); GAID, Abdelkader, F-75014 Paris (FR); SUTY, Hervé, F-94130 Nogent Sur Marne (FR); SCHROTTER, Jean-Christophe, F-78600 Maisons-Laffitte (FR); POUSSADE, Yvan, Au-Norman Park, QLD 4170 (AU)
(74) Mandataire: Ulmann, Catherine Claire
(86) Numéro de dépôt international: PCT/FR2006/002671
(87) Numéro de publication internationale: WO 2007/066010

(56) Documents cités:
- FR-A- 2 612 801
- FR-A- 2 872 063
- FR-A- 2 872 064
- US-A1- 4 154 675
- US-A1- 2005 236 335
- US-B1- 6 669 849
- PATENT ABSTRACTS OF JAPAN vol. 1995, no. 04, 31 mai 1995 (1995-05-31) & JP 07 008972 A (NICHIDEN KAGAKU KK; others: 01), 13 janvier 1995 (1995-01-13)

## Description

L'invention concerne un procédé d'élimination de matière organique et/ou de micropolluants dans l'eau.

Il existe de nombreuses filières de traitement des eaux pures et ultrapures qui utilisent la succession d'un traitement sur matériau adsorbant suivi d'un traitement d'affinage sur résines échangeuses d'ions. Les résines échangeuses d'ions sont principalement utilisées pour l'affinage, donc en fin de filière.

Par exemple, le brevet US 6 475 386 décrit un procédé de traitement des eaux potables en utilisant dans un seul réacteur la résine et l'adsorbant pour purifier une eau pré-traitée. Ce procédé ne s'applique pas à l'eau brute, et il n'est pas prévu de système de régénération du filtre.

La demande WO 96/07615 décrit un procédé de traitement de l'eau par résines échangeuse d'ions, ces résines étant séparées de l'eau avant que l'eau ne subisse un autre traitement, tel qu'une adsorption. Ce procédé nécessite la mise en oeuvre d'un dispositif de séparation en ligne pour séparer la résine en cours de traitement.

Le brevet US 6 669 849 décrit un procédé d'élimination de carbone organique dissous dans l'eau, qui met en oeuvre une résine échangeuse d'ions sous forme dispersée de granulométrie inférieure à 100 µm. la dispersion est effectuée par agitation mécanique, par des pompes de mélange ou une agitation gazeuse (col 2, I. 2-13).

Le brevet US 4 154 675 décrit un procédé d'élimination de matière dissoute dans un milieu liquide qui met en oeuvre un matériau échangeur d'ions à base de cellulose sous forme particulaire, sous agitation. Dans ce procédé, la régénération se fait par dissolution, puis reprécipitation de la cellulose (col.6, I. 38-44).

L'abstract de la demande JP 07 008972 (Patent Abstracts of Japan, vol.1995, no.04, 1995-05-31) décrit un procédé d'adsorption ou d'élimination d'un colorant/pigment dans une eau usée par adsorption sur un amidon éventuellement modifié par des groupes anioniques ou cationiques, sous agitation. Ce procédé n'est pas mis en oeuvre à l'échelle industrielle. De plus, la teneur en matière organique donnant la coloration à un effluent est significativement supérieure à celle d'une matière organique dissoute, en particulier dans l'eau potable, et les valeurs résiduelles visées après traitement sont significativement plus faibles dans le cas d'une eau potable, ce qui rend le traitement beaucoup plus difficile.

Il existe donc un besoin d'un procédé de traitement de l'eau pour éliminer la matière organique naturelle ou synthétique et/ou les micropolluants naturels ou synthétiques (par exemple, des pesticides) dans l'eau, qui puisse être effectué en continu, avec une éventuelle régénération du système de traitement sans arrêt du système, et qui puisse s'appliquer à tout type d'eau.

Par le terme « eau », on entend aussi bien de l'eau brute que de l'eau pré-traitée, ou encore un effluent, c'est-à-dire une eau ou une eau résiduaire provenant d'une enceinte fermée telle qu'une station de traitement, notamment une eau potable, ou encore provenant d'un complexe industriel ou d'un étang d'épuration.

Par « élimination de la matière organique naturelle ou synthétique et/ou des micropolluants naturels ou synthétiques », on entend un abaissement significatif de la teneur en matière organique naturelle ou synthétique et/ou en micropolluants naturels ou synthétiques par rapport à l'eau non traitée, sans qu'il soit nécessaire que cette élimination soit totale.

On a maintenant trouvé que l'utilisation d'un matériau en poudre à charge de surface anionique ou cationique, de granulométrie comprise entre 0,1 µm et 2 mm permettait d'atteindre ce but.

L'invention a donc pour objet, un procédé d'élimination de matière organique naturelle ou synthétique dans l'eau dans lequel ladite eau à traiter est mise en contact avec un matériau en poudre à charge de surface anionique ou cationique, de granulométrie comprise entre 0,1 µm et 2 mm, de préférence entre 15 µm et 150 µm, dans lequel ledit matériau en poudre à charge de surface anionique ou cationique est un produit d'origine naturelle modifié et dans lequel ledit matériau en poudre à charge de surface est flottant ou mis en lit fluiolisé 3a, et en ce qu'il comprend en outre au moins une étape ultérieure de purification de l'effluent traité provenant de l'eau mise en contact avec ledit matériau

L'eau à traiter peut être, par exemple, une eau brute, une eau pré-traitée, une eau potable ou un effluent.

Une utilisation avantageuse du procédé est l'élimination de la matière organique naturelle ou synthétique dans l'eau, et en particulier, de la matière organique dissoute.

Par « produit d'origine naturelle modifié », on entend un produit d'origine naturelle ayant subi au moins une modification chimique susceptible de lui conférer des groupements fonctionnels et/ou des propriétés physicochimiques différent(s) de ceux ou celles qu'il possédait sous sa forme native.

Avantageusement, ledit matériau utilisable dans le procédé selon l'invention est choisi parmi une gomme végétale modifiée, de l'amidon modifié et leurs mélanges.

Ladite gomme végétale, avant modification, peut être choisie parmi les glucomannanes comme le konjac, les xyloglucanes comme la gomme tamarin, les galactomannanes comme le guar, la caroube, le tara, le fenugrec ou la gomme « mesquite » (également dénommée prosopis), ou la gomme arabique, et leurs mélanges. De préférence, on utilisera les galactomannanes, en particulier les guars.

On peut également utiliser comme produit d'origine naturelle, avant modification, de l'amidon, par exemple de l'amidon de blé, de pomme de terre, de maïs, de patate douce, de tapioca, de manioc, de sagou ou de riz.

Ledit l'amidon peut éventuellement être soumis à un traitement de pré-gélatinisation, comme par exemple une cuisson à l'eau chaude ou la vapeur.

Avantageusement, ladite gomme végétale ou ledit amidon modifiés peuvent comprendre un ou plusieurs groupements cationiques ou cationisables.

Les groupements cationiques ou cationisables du produit d'origine naturelle modifié sont, par exemple, choisis parmi les ammoniums quaterrnaires, les amines tertiaires, les pyridiniums, les guanidiniums, les phosphoniums et les sulfoniums. anionique ou cationique du fait de sa plus faible densité ou sous l'action d'un flux ascendant ou d'un gaz sans être soumis à une force mécanique.

Lesdits groupements cationiques ou cationisables peuvent, par exemple, être introduits par une réaction de substitution nucléophile.

Alternativement, l'introduction de groupements cationiques ou cationisables dans le produit d'origine naturelle, notamment une gomme végétale ou un amidon, peut être réalisée par une estérification avec des acides aminés tel que par exemple la glycine, la lysine, l'arginine, l'acide 6-aminocaproïque, ou avec des dérivés d'acides aminés quaternisés tel que par exemple le chlorhydrate de bétaïne.

Selon un autre mode de réalisation, l'introduction de groupements cationiques ou cationisables est réalisée par une polymérisation radicalaire comprenant le greffage de monomères comprenant au moins un groupement cationique ou cationisable sur le produit d'origine naturelle, gomme végétale ou amidon.

De préférence, les groupements cationiques ou cationisables sont associés avec des contre-ions chargés négativement choisis parmis les ions chlorures, bromures, iodures, fluorures, sulfates, méthylsulfates, phosphates, hydrogénophosphates, phosphonates, carbonates, hydrogénocarbonates et hydroxydes.

Selon un autre aspect préféré du procédé selon l'invention, ledit produit d'origine naturelle est choisi parmi l'amidon modifié et une gomme végétale modifiée, ledit amidon modifié et ladite gomme végétale comprenant respectivement un ou plusieurs groupements anioniques ou anionisables.

Les groupements anioniques ou anionisables sont, par exemple, choisis parmi des groupements carboxylates, sulfates, sulfonates, phosphates et phosphonates.

L'introduction de groupements anioniques ou anionisables peut être effectuée, par exemple, en faisant réagir le produit d'origine naturelle, notamment une gomme végétale ou un amidon, avec un agent anionisant tel que le saltone de propane, le saltone de butane, l'acide monochloroacétique, l'acide chlorosulfonique, l'anhydride d'acide maléique, l'anhydride d'acide succinique, l'acide citrique, les sulfates, les sulfonates, les phosphates, les phosphonates, les orthophosphates, les polyphosphates, les métaphosphates et similaires.

Selon un aspect avantageux du procédé selon l'invention, ledit produit d'origine naturelle, notamment une gomme végétale ou un amidon, est modifié de manière à le rendre insoluble dans l'eau.

On peut effectuer à cet effet une réticulation chimique dudit produit d'origine naturelle, ou bien l'adsorber chimiquement ou physiquement sur un support minéral ou organique insoluble dans l'eau, ou bien exploiter sa cristallinité naturelle.

La réticulation chimique peut être réalisée, par exemple, par l'action d'un agent de réticulation choisi parmi le formaldéhyde, le glyoxal, les halohydrines telles que l'épichlorhydrine ou l'épibromhydrine, l'oxychlorure de phosphore, les polyphosphates, les diisocyanates, la biséthylène urée, les polyacides tel que l'acide adipique, l'acide citrique, l'acroléïne et similaires, ou par l'action d'un complexant métallique tel que par exemple du Zirconium (IV), ou encore sous l'effet d'un rayonnement ionisant.

Le procédé d'élimination de matière organique naturelle ou synthétique dans l'eau selon l'invention peut en outre comprendre au moins une étape de séparation de l'effluent traité, après mise en contact de l'eau à traiter avec ledit matériau.

Cette séparation peut être, par exemple, effectuée à l'aide d'un filtre, d'une grille, d'une membrane semi-perméable, d'un décanteur, d'une crépine, d'un plafond crépiné ou d'un hydrocyclone.

Avantageusement, dans le procédé selon l'invention, le matériau en poudre à charge de surface anionique ou cationique est régénéré in situ et réutilisé, ce qui permet la mise en oeuvre du procédé selon l'invention en continu.

La régénération in situ dudit matériau en poudre à charge de surface anionique ou cationique partiellement ou complètement saturé en matière organique, sans solubilisation, peut, par exemple, être réalisée de la manière suivante :
- on extrait en continu ou de manière séquencée ledit matériau du flux d'eau à traiter,
- on met en contact au sein d'un réacteur ledit matériau avec une solution régénérante adaptée, pouvant être par exemple une solution caustique ou une saumure saline, éventuellement chauffée à une température désirée, et
- on rince ledit matériau régénéré et on le réinjecte dans le flux d'eau à traiter.

Le matériau en poudre à charge de surface anionique ou cationique est flottant ou mis en lit fluidisé.

Par « flottant ou mis en lit fluidisé », on entend que le matériau en poudre à charge de surface anionique ou cationique flotte du fait de sa plus faible densité ou sous l'action d'un flux ascendant ou d'un gaz sans être soumis à une force mécanique.

Avantageusement, le fait que ledit matériau soit flottant ou mis en lit fluidisé permet de disposer d'une surface d'échange apparente plus importante et donc d'une vitesse de réaction plus élevée permettant de disposer d'un temps de contact plus court pour l'élimination de la matière organique dans l'eau.

Selon une première variante préférée du procédé selon l'invention, celui-ci comprend les étapes consistant à :
- alimenter en eau à traiter la partie inférieure d'au moins un réacteur à flux ascendant contenant ledit matériau en poudre à charge de surface anionique ou cationique, ledit réacteur comprenant à sa partie inférieure un plancher répartiteur et à sa partie supérieure un plancher ou une grille, et
- recueillir l'effluent traité à la partie supérieure du réacteur.

Une seconde variante du procédé comprend les étapes consistant à :
- alimenter en eau à traiter la partie inférieure d'au moins un réacteur à deux compartiments, l'un des compartiments étant à flux ascendant et l'autre à flux descendant, contenant ledit matériau en poudre à charge de surface anionique ou cationique, ledit réacteur comprenant à sa partie inférieure un plancher répartiteur et à sa partie supérieure un plancher ou une grille, et
- recueillir l'effluent traité à la partie supérieure du réacteur.

Avantageusement, ledit matériau est flottant. De préférence, ledit matériau en poudre à charge de surface anionique ou cationique est recueilli à la partie supérieure du réacteur.

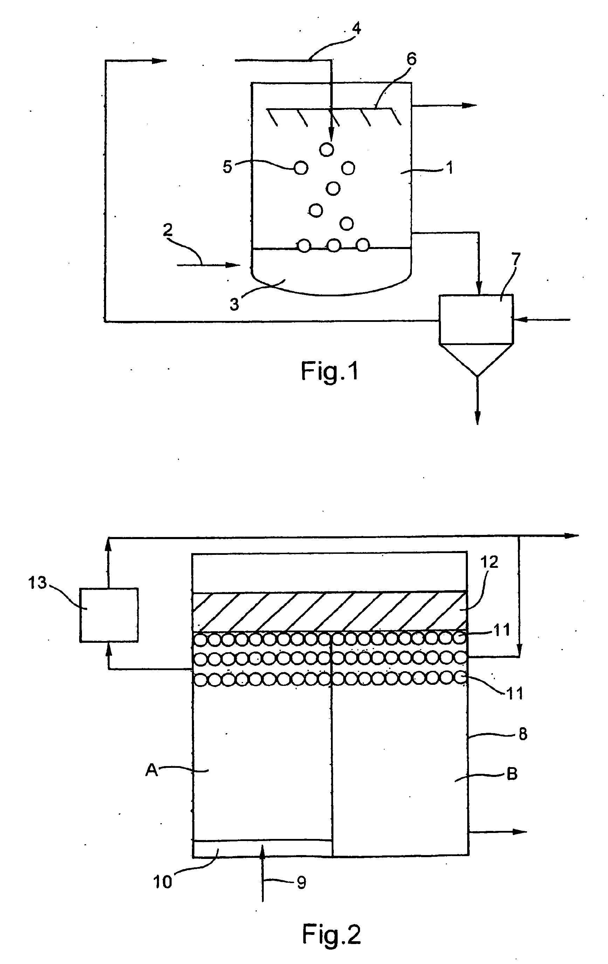

La figure 1 représente un dispositif à mode de fonctionnement en lit fluidisé comprenant un réacteur (1) à flux ascendant muni :
- en sa partie inférieure de moyens d'alimentation en eau à traiter (2) par plancher répartiteur (3) ;
- en sa partie supérieure de moyens en alimentation (4) en matériau en poudre à charge de surface anionique ou cationique (5) et de lamelles (6), l'effluent traité étant récupéré à la partie supérieure du réacteur.

Un système de séparation (7) en aval permet la régénération et le recyclage du matériau en poudre à charge de surface anionique ou cationique.

La figure 2 représente un dispositif à mode de fonctionnement en mode flottation comprenant un réacteur (8) à deux compartiments, à savoir un compartiment (A) à flux ascendant muni en sa partie inférieure de moyens d'alimentation (9) en eau à traiter par plancher répartiteur (10) et un compartiment (B) à flux descendant ; ledit réacteur comprenant en sa partie supérieure un matériau en poudre à charge de surface anionique ou cationique flottant (11) et un plafond (12), l'effluent traité étant recueilli à la partie inférieure du réacteur.

Un système de séparation (13) en aval permet la régénération et le recyclage du matériau en poudre à charge de surface anionique ou cationique.

La figure (3) représente un dispositif à mode de fonctionnement en mode flottation comprenant un réacteur à flux ascendant (14) muni en sa partie inférieure de moyens d'alimentation en eau à traiter (15) par plancher répartiteur (16); ledit réacteur comprenant en sa partie supérieure un matériau en poudre à charge de surface anionique ou cationique flottant (17), l'effluent traité étant recueilli à la partie supérieure du réacteur.

Un système de séparation (18) permet la régénération et le recyclage du matériau en poudre à charge de surface anionique ou cationique.

L' étape ultérieure de purification de l'effluent traité permet l'élimination de micropolluants et/ou de constituants résiduels de la matière organique. De préférence, ce traitement de purification est effectué par adsorption sur un matériau adsorbant.

Selon cet aspect de l'invention, on peut utiliser tout type de matériau en poudre à charge de surface anionique ou cationique, qu'il soit ou non d'origine naturelle.

Notamment, on peut utiliser un matériau en poudre à charge de surface anionique ou cationique d'origine naturelle modifié tel que défini plus haut ou bien des résines synthétiques à base styrénique ou acrylique, anioniques ou cationiques.

Selon cet aspect de l'invention, le procédé selon l'invention permet, après élimination de la matière organique naturelle ou synthétique de l'eau par mise en contact avec un matériau en poudre à charge de surface anionique ou cationique tel que décrit plus haut, d'éliminer des micropolluants naturels ou synthétiques présents dans l'effluent traité, tels que par exemple des pesticides, et/ou des constituants résiduels de la matière organique qui seraient encore présents dans l'effluent traité.

En effet, la matière organique précédemment éliminée, si celle-ci était encore présente, serait entrée en compétition défavorable avec les micropolluants.

Par ailleurs, cette étape ultérieure de purification permet d'abattre une plus large gamme de molécules organiques.

Cette étape ultérieure de purification peut notamment être réalisée à la suite des étapes d'alimentation en eau à traiter et de recueil de l'effluent traité mentionnées plus haut en tant que variantes préférées du procédé selon l'invention.

On utilisera, par exemple, un matériau adsorbant de type solide réticulé et fonctionnalisé, tel que par exemple de la silice activée, de la silice modifiée, de l'alumine activée ou des produits d'origine naturelle, modifiés ou non modifiés, tels que décrits plus haut, ou encore du charbon actif en poudre, de l'hydroxyde de fer (également dénommé GFH pour « granular ferric hydroxide ») ou de la zéolite naturelle, ledit matériau adsorbant ayant une granulométrie comprise entre 0,1 µm et 2 mm.

Avantageusement, après mise en contact de l'effluent avec ledit matériau adsorbant, l'effluent purifié est soumis à au moins une étape de séparation, qui peut être effectuée, par exemple, à l'aide d'un filtre, d'un décanteur, d'un hydrocyclone ou d'un flottateur.

Après récupération de l'effluent traité, le matériau adsorbant peut être régénéré in situ et réutilisé, ce qui permet au procédé dans son ensemble d'être réalisé en continu.

Selon cet aspect de l'invention, le procédé selon l'invention comprend les étapes consistant à :
- mettre ladite eau à traiter avec un matériau en poudre à charge de surface anionique ou cationique, de granulométrie comprise entre 0,1 µm et 2 mm,
- soumettre l'effluent traité à au moins une étape de séparation,
- alimenter en ledit effluent traité au moins un réacteur à flux ascendant contenant un matériau adsorbant tel que défini plus haut, ledit réacteur comprenant à sa partie inférieure un plancher répartiteur et à sa partie supérieure un plancher ou une grille, et
- recueillir l'effluent purifié après ce traitement ultérieur de purification.

Selon une autre variante avantageuse, le procédé selon l'invention comprend les étapes consistant à :
- mettre ladite eau à traiter avec un matériau en poudre à charge de surface anionique ou cationique, de granulométrie comprise entre 0,1 µm et 2 mm,
- soumettre l'effluent traité à au moins une étape de séparation,
- alimenter en ledit effluent traité au moins un réacteur à deux compartiments, l'un des compartiments étant à flux ascendant et l'autre à flux descendant, contenant un matériau adsorbant tel que défini plus haut, ledit réacteur comprenant à sa partie inférieure un plancher répartiteur et à sa partie supérieure un plancher ou une grille, et
- recueillir l'effluent purifié après ce traitement ultérieur de purification.

L'étape de séparation de l'effluent traité, avant l'étape ultérieure de purification, peut être, par exemple, effectuée à l'aide d'un filtre, d'une grille, d'une membrane semi-perméable, d'un décanteur, d'une crépine, d'un plafond crépiné ou d'un hydrocyclone.

Un dispositif utilisable pour la mise en oeuvre du procédé tel que décrit ci-dessus, comprend au moins un réacteur, des moyens d'alimentation d'un matériau en poudre à charge de surface anionique ou cationique dans ledit ou lesdits réacteur(s), des moyens d'alimentation de l'eau à traiter dans ledit ou lesdits réacteur(s), des moyens de séparation de l'effluent traité et des moyens de recueil de l'effluent traité, des moyens d'alimentation de l'effluent traité dans au moins un réacteur, des moyens d'alimentation d'un matériau adsorbant tel que défini plus haut dans ledit ou lesdits réacteur(s), des moyens de séparation de l'effluent purifié et des moyens de recueil dudit effluent.

Ledit dispositif peut également comprendre des moyens de recueil et de régénération du matériau adsorbant après traitement de l'effluent traité.

### Exemple 1 : Traitement d'élimination de la matière organique naturelle et de pesticides

Dans cette étude, on a comparé une mise en contact de l'eau à traiter avec un matériau en poudre à charge de surface cationique, une mise en contact de l'eau avec un matériau en poudre à charge de surface cationique suivi d'un traitement sur charbon actif avec, d'une part, un simple traitement au charbon actif et, d'autre part, un traitement simultané par les 2 réactifs (matériau en poudre à charge de surface cationique et charbon actif).

Les essais de type batch ont été conduits en réacteur fermé (béchers de 600 ml) sur des volumes d'eaux brutes souterraines (usine de traitement d'eau potable de Villejean/Rennes, France) dopée en pesticides (atrazine (280 µg/L) + isoproturon (310 µg/L)) de 500 ml, agités à l'aide d'un barreau aimanté à 300 tr/min, dans lesquels ont été introduits le matériau en poudre à charge de surface cationique et/ou le charbon actif. Les échantillons (25 ml) ont été prélevés à l'aide d'une seringue de 50 ml pour différents temps de contact, puis systématiquement filtrés au travers de filtres seringues GF (Minisart, Sartorius) et placés dans des flacons en verre avant analyse (pesticides, COD, UV254)

Les isothermes d'adsorption ont été obtenues en mettant en contact des doses croissantes de charbon actif avec 500 ml de l'eau à étudier dans des flacons en verre. Un flacon témoins sans adsorbant à permis de vérifier l'absence d'adsorption des pesticides par le flaconnage. L'agitation des flacons a été assurée par un agitateur rotatif (20 retournements par minute) à température ambiante (20-25°C). Après une période d'agitation de 24 h la concentration du soluté dans la phase aqueuse a été analysée après séparation des phases liquides et solides (filtres GFC). Des essais préliminaires ont permis de vérifier que pour 24 h de temps de contact, un état de pseudo-équilibre d'adsorption des pesticides était atteint.

Les analyses de pesticides ont été effectuées par chromatographie en phase liquide (HPLC) sur une colonne WATERS Resolve 5 µm Spherical C₁₈ (débit : 0,7 ml/min, phase éluante : 50 % eau/ 50 % méthanol (v/v)). La détection a été réalisée avec un détecteur WATERS 486 à une longueur d'onde de 233 nm (longueur d'onde optimale pour la détection simultanée de l'atrazine et de l'isoproturon pour des concentrations comprises entre 5 et 200 µg/l).

La cinétique d'adsorption du charbon actif Picazine HP 15-35 est utilisée dans les configurations suivantes:
a) seul (charbon actif en poudre (CAP), 40 mg/l)
b) couplé de manière séquentielle à un matériau en poudre de surface cationique à base d'amidon modifié dénommé ci-après AM (AM, 400 mg/l puis CAP, 40 mg/l). Le matériau AM est un amidon soluble à froid, qui a été réticulé à l'épibromohydrine puis cationisé avec du chlorure de 2,3-époxypropyltriméthyl-ammonium. Le degré de substitution cationique du matériau AM est de 0,51.

Ce couplage consiste en un prétraitement des eaux par le matériau AM (30 min), puis une filtration intermédiaire pour séparer l'eau du matériau AM et un traitement final des eaux par le charbon actif (30 min). c) couplé simultanément au matériau AM (CAP, 40 mg/L + AM, 400 mg/l).

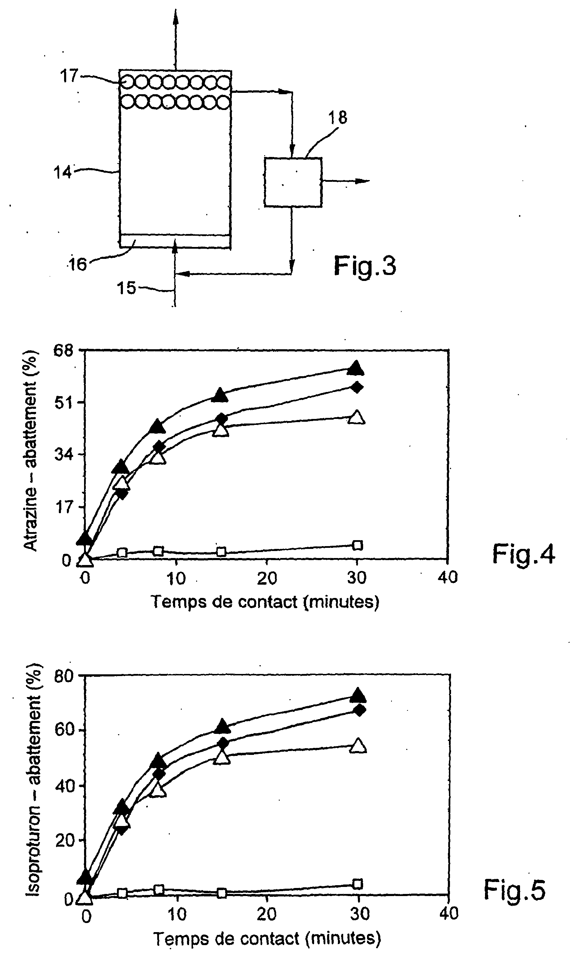

Les résultats sont rapportés sur les figures 4 et 5.

Les courbes des figures 4 et 5 représentent respectivement le pourcentage d'abattement de l'atrazine et de l'isoproturon en fonction du temps de contact avec le matériau adsorbant.

Les symboles suivants sont utilisés :
-◆- pour le charbon actif (CAP) seul ;
-□- pour le matériau AM seul ;
-▲- pour le traitement séquentiel (matériau AM puis CAP).
-Δ- pour le traitement simultané par le matériau AM et le CAP.

Les résultats montrent que le matériau AM à base d'amidon modifié seul n'est pas efficace pour l'abattement des pesticides (atrazine et isoproturon) car ces derniers sont des molécules non chargées et, donc, ne peuvent pas s'adsorber sur les matériaux en poudre à charge de surface.

Le CAP seul permet d'obtenir un bon abattement en pesticide. Cependant sa capacité est limitée par des phénomènes de compétition entre la matière organique et les pesticides vis-à-vis des sites d'adsorption du charbon actif .

Le traitement simultané par CAP+AM donne de moins bons résultats que le traitement par le CAP seul en raison de l'absorption du matériau AM à base d'amidon modifié sur le CAP.

Le traitement séquentiel par le matériau AM à base d'amidon modifié puis par le CAP, permet d'obtenir le meilleur abattement des pesticides. En effet, dans un premier temps, le matériau AM à base d'amidon modifié absorbe la matière organique dissoute, laissant toute la capacité du CAP pour adsorber les pesticides dans un second temps.

Les performances des différents traitements, exprimées en quantité de carbone organique dissous présent dans l'effluent, sont rapportées dans le tableau 1 ci-dessous.

**Tableau 1**

| **Type de traitement** | **Carbone organique dissous (mg/l)** |
|---|---|
| Eau brute | 6,25 |
| CAP (40 mg/l) | 5,60 |
| AM seul (400 mg/l) | 2,60 |
| AM (400 mg/l) puis CAP (40 mg/l) | 2,35 |

Les résultats montrent que le traitement par le matériau AM à base d'amidon modifié seul permet d'abaisser significativement la teneur en carbone organique dissous dans l'effluent.

Le traitement séquentiel par le matériau AM à base d'amidon modifié seul puis par CA donne les meilleurs résultats d'abattement de la teneur en carbone organique dissous dans l'effluent.

## Revendications

1. Procédé d'élimination de matière organique naturelle ou synthétique dans l'eau, **caractérisé en ce que** ladite eau à traiter est mise en contact avec un matériau en poudre à charge de surface anionique ou cationique, de granulométrie comprise entre 0,1 µm et 2 mm, ledit matériau en poudre à charge de surface anionique ou cationique étant un produit d'origine naturelle modifié, **en ce que** ledit matériau en poudre à charge de surface anionique ou cationique est flottant ou mis en lit fluidisé du fait de sa plus faible densité ou sous l'action d'un flux ascendant ou d'un gaz sans être soumis à une force mécanique et **en ce qu'**il comprend en outre au moins une étape ultérieure de purification de l'effluent traité provenant de l'eau mise en contact avec ledit matériau.

2. Procédé selon la revendication 1, **caractérisé en ce que** la granulométrie est comprise entre 15 µm et 150 µm.

3. Procédé selon l'une des revendications 1 ou 2, **caractérisé en ce que** ladite eau est une eau brute, une eau pré-traitée, une eau potable ou un effluent.

4. Procédé selon quelconque des revendications 1 à 3, **caractérisé en ce que** ledit produit d'origine naturelle modifié est choisi parmi une gomme végétale modifiée, de l'amidon modifié, et leurs mélanges.

5. Procédé selon l'une quelconque des revendications 1 à 3, ledit produit d'origine naturelle avant modification est de l'amidon choisi parmi l'amidon de blé, de pomme de terre, de maïs, de patate douce, de tapioca, de manioc, de sagou ou de riz.

6. Procédé selon la revendication 5, **caractérisé en ce que** ledit produit d'origine naturelle modifié est de l'amidon ayant subi un prétraitement de pré-gélatinisation.

7. Procédé selon l'une quelconque des revendications 1 à 4, **caractérisé en ce que** ledit produit d'origine naturelle avant modification est une gomme végétale choisie parmi les glucomannanes, les xyloglucanes, les galactomannanes et leurs mélanges.

8. Procédé selon l'une quelconque des revendications 1 à 7, **caractérisé en ce que** ledit produit d'origine naturelle est choisi parmi l'amidon modifié et une gomme végétale modifiée, ledit amidon modifié et ladite gomme végétale modifiée comprenant respectivement un ou plusieurs groupements cationiques ou cationisables.

9. Procédé selon la revendication 8, **caractérisé en ce que** les groupements cationiques ou cationisables sont choisis parmi les ammoniums quatermaires, les amines tertiaires, les pyridiniums, les guanidiniums, les phosphoniums et les sulfoniums.

10. Procédé selon l'une des revendications 8 ou 9, **caractérisé en ce que** les groupements cationiques ou cationisables sont associés avec des contre-ions chargés négativement choisis parmi les ions chlorures, bromures, iodures, fluorures, sulfates, méthylsulfates, phosphates, hydrogénophosphates, phosphonates, carbonates, hydrogénocarbonates et hydroxydes.

11. Procédé selon l'une quelconque des revendications 1 à 9, **caractérisé en ce que** ledit produit d'origine naturelle est choisi parmi l'amidon modifié et une gomme végétale modifiée, ledit amidon modifié et ladite gomme végétale modifiée comprenant respectivement un ou plusieurs groupements anioniques ou anionisables.

12. Procédé selon la revendication 11, **caractérisé en ce que** les groupements anioniques ou anionisables sont choisis parmi des groupements carboxylates, sulfates, sulfonates, phosphates et phosphonates.

13. Procédé selon l'une quelconque des revendications 1 à 12, **caractérisé en ce que** ledit produit d'origine naturelle est modifié pour le rendre insoluble dans l'eau.

14. Procédé selon l'une quelconque des revendications 1 à 13, **caractérisé en ce que** ladite étape de purification est une étape d'élimination de micropolluants naturels ou synthétiques et/ou de constituants résiduels de la matière organique.

15. Procédé selon l'une quelconque des revendications 1 à 14, **caractérisé en ce que** ledit traitement de purification est effectué par adsorption sur un matériau adsorbant.

16. Procédé selon la revendication 15, **caractérisé en ce que** ledit matériau adsorbant est de type solide réticulé et fonctionnalisé ayant une granulométrie comprise entre 0,1 µm et 2 mm.

17. Procédé selon l'une quelconque des revendications 1 à 16, **caractérisé en ce que**, après mise en contact de l'effluent traité avec ledit matériau adsorbant, l'effluent purifié est soumis à au moins une étape de séparation.

18. Procédé selon la revendication 17, **caractérisé en ce que** ladite séparation est effectuée à l'aide d'un filtre, d'une grille, d'une membrane semi-perméable, d'un décanteur, d'une crépine, d'un plafond crépiné, d'un hydrocyclone ou d'un flottateur.

19. Procédé selon l'une quelconque des revendications 1 à 18, **caractérisé en ce que** le matériau adsorbant est régénéré in situ et réutilisé.

20. Procédé selon l'une quelconque des revendications 1 à 19, **caractérisé en ce qu'**il est réalisé en continu.

21. Procédé selon l'une quelconque des revendications 1 à 20, **caractérisé en ce qu'**il comprend les étapes consistant à :
- alimenter en eau à traiter la partie inférieure d'au moins un réacteur à flux ascendant contenant ledit matériau en poudre à charge de surface anionique ou cationique, ledit réacteur comprenant à sa partie inférieure un plancher répartiteur et à sa partie supérieure un plancher ou une grille, et
- recueillir l'effluent traité à la partie supérieure du réacteur.

22. Procédé selon l'une quelconque des revendications 1 à 20, **caractérisé en ce qu'**il comprend les étapes consistant à
- alimenter en eau à traiter la partie inférieure d'au moins un réacteur à deux compartiments, l'un des compartiments étant à flux ascendant et l'autre à flux descendant, contenant ledit matériau en poudre à charge de surface anionique ou cationique, ledit réacteur comprenant à sa partie inférieure un plancher répartiteur et à sa partie supérieure un plancher ou une grille, et
- recueillir l'effluent traité à la partie supérieure du réacteur.

23. Procédé selon l'une des revendications 21 ou 22, **caractérisé en ce que** ledit matériau est flottant.

24. Procédé selon l'une quelconque des revendications 21 à 23, **caractérisé en ce qu'**on recueille ledit matériau à la partie inférieure du réacteur.

25. Procédé selon l'une quelconque des revendications 21, 23 ou 24 **caractérisé en ce qu'**il comprend en outre les étapes consistant à :
- alimenter en ledit effluent traité au moins un réacteur à flux ascendant contenant un matériau adsorbant, ledit réacteur comprenant à sa partie inférieure un plancher répartiteur et à sa partie supérieure un plancher ou une grille, et
- recueillir l'effluent purifié après ce traitement ultérieur de purification.

26. Procédé selon l'une quelconque des revendications 21 à 23, **caractérisé en ce qu'**il comprend en outre les étapes consistant à :
- alimenter en ledit effluent traité au moins un réacteur à deux compartiments, l'un des compartiments étant à flux ascendant et l'autre à flux descendant, contenant un matériau adsorbant, ledit réacteur comprenant à sa partie inférieure un plancher répartiteur et à sa partie supérieure un plancher ou une grille, et
- recueillir l'effluent purifié après ce traitement ultérieur de purification.

27. Procédé selon l'une quelconque des revendications 1 à 15, **caractérisé en ce qu'**il comprend les étapes consistant à :
- mettre ladite eau à traiter avec ledit matériau en poudre à charge de surface anionique ou cationique, de granulométrie comprise entre 0,1 µm et 2 mm,
- soumettre l'effluent traité à au moins une étape de séparation,
- alimenter en ledit effluent traité au moins un réacteur à flux ascendant contenant un matériau adsorbant , ledit réacteur comprenant à sa partie inférieure un plancher répartiteur et à sa partie supérieure un plancher ou une grille, et
- recueillir l'effluent purifié après ce traitement ultérieur de purification.

28. Procédé selon l'une quelconque des revendications 1 à 15, **caractérisé en ce qu'**il comprend les étapes consistant à :
- mettre ladite eau à traiter avec ledit matériau en poudre à charge de surface anionique ou cationique, de granulométrie comprise entre 0,1 µm et 2 mm,
- soumettre l'effluent traité à au moins une étape de séparation,
- alimenter en ledit effluent traité au moins un réacteur à deux compartiments, l'un des compartiments étant à flux ascendant et l'autre à flux descendant, contenant un matériau adsorbant, ledit réacteur comprenant à sa partie inférieure un plancher répartiteur et à sa partie supérieure un plancher ou une grille, et
- recueillir l'effluent purifié après ce traitement ultérieur de purification.

29. Procédé selon l'une des revendications 27 ou 28, **caractérisé en ce que** l'alimentation en eau à traiter et le recueil de l'effluent traité, avant purification, comprennent les étapes consistant à :
- alimenter en eau à traiter la partie inférieure d'au moins un réacteur à flux ascendant contenant ledit matériau en poudre à charge de surface anionique ou cationique, ledit réacteur comprenant à sa partie inférieure un plancher répartiteur et à sa partie supérieure un plancher ou une grille, et
- recueillir l'effluent traité à la partie supérieure du réacteur.

30. Procédé selon l'une des revendications 27 ou 28, **caractérisé en ce que** l'alimentation en eau à traiter et le recueil de l'effluent traité, avant purification, comprennent les étapes consistant à :
- alimenter en eau à traiter la partie inférieure d'au moins un réacteur à deux compartiments, l'un des compartiments étant à flux ascendant et l'autre à flux descendant, contenant ledit matériau en poudre à charge de surface anionique ou cationique, ledit réacteur comprenant à sa partie inférieure un plancher répartiteur et à sa partie supérieure un plancher ou une grille, et
- recueillir l'effluent traité à la partie supérieure du réacteur.

## Claims

1. Method for removing natural or synthetic organic matter from water, **characterised in that** said water to be treated is brought into contact with a powdered material with an anionic or cationic surface charge, having a particle size of between 0.1 µm and 2 mm, said powdered material with an anionic or cationic surface charge being a modified product of natural origin, **in that** said powdered material with an anionic or cationic surface charge is floating or placed in a fluidised bed owing to its lower density or under the action of an ascending stream or of a gas without being subjected to a mechanical force, and **in that** it also comprises at least one subsequent step of purifying the treated effluent brought into contact with said material.

2. Method according to claim 1, **characterised in that** the particle size is between 15 µm and 150 µm.

3. Method according to either of claims 1 and 2, **characterised in that** said water is raw water, pretreated water, drinking water or an effluent.

4. Method according to any one of claims 1 to 3, **characterised in that** said modified product of natural origin is selected from a modified plant gum and modified starch, and mixtures thereof.

5. Method according to any one of claims 1 to 3, **characterised in that** said product of natural origin before modification is starch selected from wheat starch, potato starch, corn starch, sweet potato starch, tapioca starch, cassava starch, sago starch or rice starch.

6. Method according to claim 5, **characterised in that** said modified product of natural origin is starch which has undergone a pregelatinisation pretreatment.

7. Method according to any one of claims 1 to 4, **characterised in that** said product of natural origin before modification is a plant gum selected from glucomannans, xyloglucans and galactomannans, and mixtures thereof.

8. Method according to any one of claims 1 to 7, **characterised in that** said product of natural origin is selected from modified starch and a modified plant gum, said modified starch and said modified plant gum comprising respectively one or more cationic or cationisable groups.

9. Method according to claim 8, **characterised in that** the cationic or cationisable groups are selected from quaternary ammoniums, tertiary amines, pyridiniums, guanidiniums, phosphoniums and sulfoniums.

10. Method according to either of claims 8 and 9, **characterised in that** the cationic or cationisable groups are associated with negatively charged counterions selected from chloride, bromide, iodide, fluoride, sulfate, methyl sulfate, phosphate, hydrogen phosphate, phosphonate, carbonate, hydrogen carbonate and hydroxide ions.

11. Method according to any one of claims 1 to 9, **characterised in that** said product of natural origin is selected from modified starch and a modified plant gum, said modified starch and said modified plant gum comprising respectively one or more anionic or anionisable groups.

12. Method according to claim 11, **characterised in that** the anionic or anionisable groups are selected from carboxylate, sulfate, sulfonate, phosphate and phosphonate groups.

13. Method according to any one of claims 1 to 12, **characterised in that** said product of natural origin is modified so as to render it water-insoluble.

14. Method according to any one of claims 1 to 13, **characterised in that** said purification step is a step of removing natural or synthetic micropollutants and/or residual constituents of the organic matter.

15. Method according to any one of claims 1 to 14, **characterised in that** said purification treatment is carried out by adsorption onto an adsorbent material.

16. Method according to claim 15, **characterised in that** said adsorbent material is of crosslinked and functionalized solid type having a particle size of between 0.1 µm and 2 mm.

17. Method according to any one of claims 1 to 16, **characterised in that**, after the treated effluent has been brought into contact with said adsorbent material, the purified effluent is subjected to at least one separation step.

18. Method according to claim 17, **characterised in that** the separation is carried out using a filter, a grid, a semipermeable membrane, a settling tank, a strainer, a perforated top, a hydrocyclone or a flotation separator.

19. Method according to any one of claims 1 to 18, **characterised in that** the adsorbent material is regenerated in situ and re-used.

20. Method according to any one of claims 1 to 19, **characterised in that** it is carried out continuously.

21. Method according to any one of claims 1 to 20, **characterised in that** it comprises the steps consisting in:
- feeding the lower part of at least one ascending-flow reactor, containing said powdered material with an anionic or cationic surface charge, with water to be treated, said reactor comprising at its lower part a distributing floor and at its upper part a floor or a grid, and
- collecting the treated effluent at the upper part of the reactor.

22. Method according to any one of claims 1 to 20, **characterised in that** it comprises the steps consisting in:
- feeding the lower part of at least one 2-compartment reactor, wherein one of the compartments is an ascending-flow compartment and the other is a descending-flow compartment, containing said powdered material with an anionic or cationic surface charge, with water to be treated, said reactor comprising at its lower part a distributing floor and at its upper part a floor or a grid, and
- collecting the treated effluent at the upper part of the reactor.

23. Method according to either of claims 21 and 22, **characterised in that** said material is floating.

24. Method according to any one of claims 21 to 23, **characterised in that** said material is collected at the lower part of the reactor.

25. Method according to any one of claims 21, 23 or 24, **characterised in that** it also comprises the steps consisting in:
- feeding at least one ascending-flow reactor, containing an adsorbent material, with said treated effluent, said reactor comprising at its lower part a distributing floor and at its upper part a floor or a grid, and
- collecting the purified effluent after this subsequent purification treatment.

26. Method according to any one of claims 21 to 23, **characterised in that** it also comprises the steps consisting in:
- feeding at least one 2-compartment reactor, wherein one of the compartments is an ascending-flow compartment, and the other is a descending-flow compartment, containing an adsorbent material, with said treated effluent, said reactor comprising at its lower part a distributing floor and at its upper part a floor or a grid, and
- collecting the purified effluent after this subsequent purification treatment.

27. Method according to any one of claims 1 to 15, **characterised in that** it comprises the steps consisting in:
- placing said water to be treated together with said powdered material with an anionic or cationic surface charge, having a particle size of between 0.1 µm and 2 mm,
- subjecting the treated effluent to at least one separation step,
- feeding at least one ascending-flow reactor, containing an adsorbent material, with said treated effluent, said reactor comprising at its lower part a distributing floor and at its upper part a floor or a grid, and
- collecting the purified effluent after this subsequent purification treatment.

28. Method according to any one of claims 1 to 15, **characterised in that** it comprises the steps consisting in:
- placing said water to be treated together with said powdered material with an anionic or cationic surface charge, having a particle size of between 0.1 µm and 2 mm,
- subjecting the treated effluent to at least one separation step,
- feeding at least one 2-compartment reactor, wherein one of the compartments is an ascending-flow compartment and the other is a descending-flow compartment, containing an adsorbent material, with said treated effluent, said reactor comprising at its lower part a distributing floor and at its upper part a floor or a grid, and
- collecting the purified effluent after this subsequent purification treatment.

29. Method according to either of claims 27 and 28, **characterised in that** the feeding with water to be treated and the collecting of the treated effluent, before purification, comprise the steps consisting in:
- feeding the lower part of at least one ascending-flow reactor, containing said powdered material with an anionic or cationic surface charge, with water to be treated, said reactor comprising at its lower part a distributing floor and at its upper part a floor or a grid, and
- collecting the treated effluent at the upper part of the reactor.

30. Method according to either of claims 27 and 28, **characterised in that** the feeding with water to be treated and the collecting of the treated effluent, before purification, comprise the steps consisting in:
- feeding the lower part of at least one 2-compartment reactor, wherein one of the compartments is an ascending flow compartment and the other is a descending-flow compartment, containing said powdered material with an anionic or cationic surface charge, with water to be treated, said reactor comprising at its lower part a distributing floor and at its upper part a floor or a grid, and
- collecting the treated effluent at the upper part of the reactor.

## Patentansprüche

1. Verfahren zur Entfernung von natürlichem oder synthetischem organischem Material in Wasser, **dadurch gekennzeichnet, dass** das zu behandelnde Wasser mit einem pulverförmigen Material mit anionischer oder kationischer Oberflächenladung mit einer Granulometrie von zwischen 0,1 µm und 2 mm in Kontakt gebracht wird, wobei das pulverförmige Material mit anionischer oder kationischer Oberflächenladung ein Produkt natürlicher Herkunft, das modifiziert wurde, ist, **dadurch gekennzeichnet, dass** das pulverförmige Material mit anionischer oder kationischer Oberflächenladung schwebend ist oder in ein Wirbelbett gebracht wurde, und zwar infolge seiner schwächeren Dichte oder unter der Wirkung eines aufsteigenden Stroms oder eines Gases, ohne einer mechanischen Kraft unterworfen zu werden, und **dadurch**, dass es außerdem wenigstens eine nachfolgende Reinigungsstufe des behandelten Ausflusses, der aus dem Wasser, das mit dem Material in Kontakt gebracht wurde, stammt, umfasst.

2. Verfahren gemäß Anspruch 1, **dadurch gekennzeichnet, dass** die Granulometrie zwischen 15 µm und 150 µm ist.

3. Verfahren gemäß einem der Ansprüche 1 oder 2, **dadurch gekennzeichnet, dass** das Wasser Rohwasser, ein vorbehandeltes Wasser, ein Trinkwasser oder ein Abwasser ist.

4. Verfahren gemäß einem der Ansprüche 1 bis 3, **dadurch gekennzeichnet, dass** das Produkt natürlicher Herkunft, das modifiziert wurde, aus einem modifizierten pflanzlichen Gummi, modifizierter Stärke und deren Gemischen ausgewählt wird.

5. Verfahren gemäß einem der Ansprüche 1 bis 3, wobei das Produkt natürlicher Herkunft vor Modifikation Stärke ist, die aus Stärke von Weizen, Kartoffel, Mais, Süßkartoffel, Tapioka, Maniok, Sago oder Reis ausgewählt wird.

6. Verfahren gemäß Anspruch 5, **dadurch gekennzeichnet, dass** das Produkt natürlicher Herkunft, das modifiziert wurde, Stärke ist, die einer Vorbehandlung der Vorgelatinierung unterzogen wurde.

7. Verfahren gemäß einem der Ansprüche 1 bis 4, **dadurch gekennzeichnet, dass** das Produkt natürlicher Herkunft vor Modifikation ein pflanzlicher Gummi ist, der aus Glucomannanen, Xyloglucanen, Galactomannanen und ihren Gemischen ausgewählt wird.

8. Verfahren gemäß einem der Ansprüche 1 bis 7, **dadurch gekennzeichnet, dass** das Produkt natürlicher Herkunft aus modifizierter Stärke und einem modifizierten Pflanzengummi ausgewählt wird, wobei die modifizierte Stärke und der modifizierte Pflanzengummi jeweils eine oder mehrere kationische oder kationisierbare Gruppierung(en) umfassen.

9. Verfahren gemäß Anspruch 8, **dadurch gekennzeichnet, dass** die kationischen oder kationisierbaren Gruppierungen aus quaternären Ammonium-, tertiären Amin-, Pyridinium-, Guanidinium-, Phosphonium- und Sulfonium-Gruppierungen ausgewählt sind.

10. Verfahren gemäß einem der Ansprüche 8 oder 9, **dadurch gekennzeichnet, dass** die kationischen oder kationisierbaren Gruppierungen mit negativ geladenen Gegenionen assoziiert sind, die aus Chlorid-, Bromid-, Iodid-, Fluorid-, Sulfat-, Methylsulfat-, Phosphat-, Hydrogenphosphat-, Phosphonat-, Carbonat-, Hydrogencarbonat- und Hydroxidionen ausgewählt werden.

11. Verfahren gemäß einem der Ansprüche 1 bis 9, **dadurch gekennzeichnet, dass** das Produkt natürlicher Herkunft aus modifizierter Stärke und einem modifizierten Pflanzengummi ausgewählt wird, wobei die modifizierte Stärke und der modifizierte Pflanzengummi jeweils eine oder mehrere anionische oder anionisierbare Gruppierung(en) umfassen.

12. Verfahren gemäß Anspruch 11, **dadurch gekennzeichnet, dass** die anionischen oder anionisierbaren Gruppierungen aus Carboxylat-, Sulfat-, Sulfonat-, Phosphat- und Phosphonat-Gruppierungen ausgewählt werden.

13. Verfahren gemäß einem der Ansprüche 1 bis 12, **dadurch gekennzeichnet, dass** das Produkt natürlicher Herkunft modifiziert ist, um es in Wasser unlöslich zu machen.

14. Verfahren gemäß einem der Ansprüche 1 bis 13, **dadurch gekennzeichnet, dass** die Reinigungsstufe eine Stufe der Entfernung von natürlichen oder synthetischen Mikroschmutzstoffen und/oder restlichen Bestandteilen des organischen Materials ist.

15. Verfahren gemäß einem der Ansprüche 1 bis 14, **dadurch gekennzeichnet, dass** die Reinigungsbehandlung durch Adsorption an einem Adsorptionsmaterial durchgeführt wird.

16. Verfahren gemäß Anspruch 15, **dadurch gekennzeichnet, dass** das Adsorptionsmaterial zum festen vernetzten und funktionalisierten Typ mit einer Granulometrie von zwischen 0,1 µm und 2 mm ist.

17. Verfahren gemäß einem der Ansprüche 1 bis 16, **dadurch gekennzeichnet, dass** nach In-Kontakt-Bringen des behandelten Ausflusses mit dem Adsorptionsmittelmaterial der gereinigte Ausfluss wenigstens einer Trennungsstufe unterworfen wird.

18. Verfahren gemäß Anspruch 17, **dadurch gekennzeichnet, dass** die Trennung mit Hilfe eines Filters, eines Gitters, einer semipermeablen Membran, eines Dekanters, eines Korbs, eines Netzes (Crepine), eines hängenden Netzes, eines Hydrozyklons oder eines Flottationsgeräts durchgeführt wird.

19. Verfahren nach einem der Ansprüche 1 bis 18, **dadurch gekennzeichnet, dass** das Adsorptionsmaterial in situ regeneriert und wiederverwendet wird.

20. Verfahren gemäß einem der Ansprüche 1 bis 19, **dadurch gekennzeichnet, dass** es kontinuierlich durchgeführt wird.

21. Verfahren gemäß einem der Ansprüche 1 bis 20, **dadurch gekennzeichnet, dass** es die Stufen, bestehend aus
- Einspeisen von zu behandelndem Wasser in den unteren Teil wenigstens eines Reaktors mit aufsteigendem Strom, der das pulverförmige Material mit anionischer oder kationischer Oberflächenladung enthält, wobei der Reaktor in seinem unteren Teil eine Verteilerplatte umfasst und in seinem oberen Teil eine Platte oder ein Gitter umfasst, und
- Sammeln des behandelten Ausflusses im oberen Teil des Reaktors,
umfasst.

22. Verfahren gemäß einem der Ansprüche 1 bis 20, **dadurch gekennzeichnet, dass** es die Stufen, bestehend aus
- Einspeisen von zu behandelndem Wasser in den unteren Teil wenigstens eines Reaktors mit zwei Kompartimenten, wobei eines der Kompartimente mit aufsteigendem Strom ist und das andere mit absteigendem Strom ist, enthaltend das pulverförmige Material mit anionischer oder kationischer Oberflächenladung, wobei der Reaktor in seinem unteren Teil eine Verteilerplatte umfasst und in seinem oberen Teil eine Platte oder ein Gitter umfasst, und
- Sammeln des behandelten Ausflusses im oberen Teil des Reaktors,
umfasst.

23. Verfahren gemäß einem der Ansprüche 21 oder 22, **dadurch gekennzeichnet, dass** das Material schwebend ist.

24. Verfahren gemäß einem der Ansprüche 21 bis 23, **dadurch gekennzeichnet, dass** man das Material im unteren Teil des Reaktors sammelt.

25. Verfahren gemäß einem der Ansprüche 21, 23 oder 24, **dadurch gekennzeichnet, dass** es außerdem die Stufen, bestehend aus
- Einspeisen des behandelten Ausflusses in wenigstens einen Reaktor mit aufsteigendem Strom, der ein Adsorptionsmaterial enthält, wobei der Reaktor in seinem unteren Teil eine Verteilungsplatte und in seinem oberen Teil eine Platte oder ein Gitter umfasst, und
- Sammeln des gereinigten Ausflusses nach dieser nachfolgenden Reinigungsbehandlung,
umfasst.

26. Verfahren gemäß einem der Ansprüche 21 bis 23, **dadurch gekennzeichnet, dass** es außerdem die Stufen, bestehend aus
- Einspeisen des behandelten Ausflusses in wenigstens einen Reaktor mit zwei Kompartimenten, wobei eines der Kompartimente mit aufsteigendem Strom ist und das andere mit absteigendem Strom, enthaltend ein Adsorptionsmaterial, ist, wobei der Reaktor in seinem unteren Teil eine Verteilerplatte und in seinem oberen Teil eine Platte oder ein Gitter umfasst, und
- Sammeln des gereinigten Ausflusses nach dieser nachfolgenden Reinigungsbehandlung,
umfasst.

27. Verfahren gemäß einem der Ansprüche 1 bis 15, **dadurch gekennzeichnet, dass** es die Stufen, bestehend aus
- In-Kontakt-Bringen des zu behandelnden Wassers mit dem pulverförmigen Material mit anionischer oder kationischer Oberflächenladung mit einer Granulometrie von zwischen 0,1 µm und 2 mm,
- Unterwerfen des behandelten Ausflusses wenigstens einer Trennungsstufe,
- Einspeisen des behandelten Ausflusses in wenigstens einen Reaktor mit aufsteigendem Strom, der Adsorptionsmaterial enthält, wobei der Reaktor in seinem unteren Teil eine Verteilerplatte und in seinem oberen Teil eine Platte oder ein Gitter umfasst, und
- Sammeln des gereinigten Ausflusses nach dieser nachfolgenden Reinigungsbehandlung,
umfasst.

28. Verfahren gemäß einem der Ansprüche 1 bis 15, **dadurch gekennzeichnet, dass** es die Stufen, bestehend aus
- In-Kontakt-Bringen des zu behandelnden Wassers mit dem pulverförmigen Material mit anionischer oder kationischer Oberflächenladung mit einer Granulometrie von zwischen 0,1 µm und 2 mm,
- Unterwerfen des behandelten Ausflusses wenigstens einer Trennungsstufe,
- Einspeisen des behandelten Ausflusses in wenigstens einen Reaktor mit zwei Kompartimenten, wobei eines der Kompartimente mit aufsteigendem Strom ist und das andere mit absteigendem Strom ist, das ein Adsorptionsmaterial enthält, wobei der Reaktor in seinem unteren Teil eine Verteilerplatte und in seinem oberen Teil eine Platte oder ein Gitter umfasst, und
- Sammeln des gereinigten Ausflusses nach dieser nachfolgenden Reinigungsbehandlung,
umfasst.

29. Verfahren gemäß einem der Ansprüche 27 oder 28, **dadurch gekennzeichnet, dass** die Einspeisung von zu behandelndem Wasser und das Sammeln des behandelten Ausflusses vor Reinigung die Schritte, bestehend aus:
- Einspeisen von zu behandelndem Wasser in den unteren Teil wenigstens eines Reaktors mit aufsteigendem Strom, der das pulverförmige Material mit anionischer oder kationischer Oberflächenladung enthält, wobei der Reaktor in seinem unteren Teil eine Verteilerplatte und in seinem oberen Teil eine Platte oder ein Gitter umfasst, und
- Sammeln des behandelten Ausflusses im oberen Teil des Reaktors,
umfasst.

30. Verfahren gemäß einem der Ansprüche 27 oder 28, **dadurch gekennzeichnet, dass** die Einspeisung von zu behandelndem Wasser und das Sammeln des behandelten Ausflusses vor Reinigung die Schritte, bestehend aus:
- Einspeisen von zu behandelndem Wasser in den unteren Teil wenigstens eines Reaktors mit zweit Kompartimenten, wobei eines der Kompartimente mit aufsteigendem Strom ist und das andere mit absteigendem Strom ist, das das pulverförmige Material mit anionischer oder kationischer Oberflächenladung enthält, wobei der Reaktor in seinem unteren Teil eine Verteilerplatte und in seinem oberen Teil eine Platte oder ein Gitter umfasst, und
- Sammeln des behandelten Ausflusses im oberen Teil des Reaktors,
umfasst.
